# EUROPÄISCHE PATENTANMELDUNG

(11) **EP 1 174 680 A2**
(43) Veröffentlichungstag der Anmeldung: **23.01.2002**
(21) Anmeldenummer: 01117591.6
(22) Anmeldetag: 20.07.2001
(51) Int. Cl.: G01B 11/00

(54) **Vorrichtung zur Veränderung der Länge der Laufstrecke einer elektromagnetischen Welle**

(30) Priorität: 21.07.2000 DE 10035833
(71) Anmelder: Medizinisches Laserzentrum Lübeck GmbH, D-23562 Lübeck (DE)
(72) Erfinder: Koch, Peter, 23554 Lübeck (DE); Scholz, Christian, 22844 Norderstedt (DE); Engelhardt, Ralf, 23568 Lübeck (DE)
(74) Vertreter: Vollmann, Heiko, Dipl.-Ing.

(57) **Zusammenfassung**

Die Vorrichtung dient zur Veränderung der Länge der Laufstrecke einer elektromagnetischen Welle. Sie weist einen Wellenleiter (1) auf, der auf einen Kern (2, 3) aufgewickelt ist. Der Kern (2, 3) ist zweiteilig ausgebildet, wobei der Abstand (a) der Kernteile (2 und 3) zueinander veränderbar ist, um den Wellenleiter (1) definiert zu dehnen.

## Beschreibung

Die Erfindung betrifft eine Vorrichtung zur Veränderung der Länge der Laufstrecke einer elektromagnetischen Welle gemäß den im Oberbegriff des Anspruchs 1 angegebenen Merkmalen.

Vorrichtungen dieser Art sind bekannt und dienen zur Laufzeitveränderung einer elektromagnetischen Welle, insbesondere eines Lichtstrahls, zur Erzeugung einer Doppler-Verschiebung, zur Erzeugung eines zeitabhängigen Spektrums oder dergleichen. Sie werden beispielsweise bei der optischen Kohärenztomographie (OCT), in Fasergyroskopen oder auch bei der Fouriertransformspektroskopie eingesetzt. Derartige Vorrichtungen sind überall dort einsetzbar, wo es erforderlich ist, die optische Weglänge eines Strahlengangs zu verändern.

Bekannte Vorrichtungen arbeiten entweder mit Spiegelanordnungen oder aber, wie die hier in Rede stehenden, mit einem Wellenleiter, insbesondere einer Quarzfaser, deren Länge durch Dehnen des Leiters bzw. der Faser verändert wird.

In US-PS 5,321,501 ist ein Gerät für die optische Kohärenztomographie beschrieben, das eine solche Vorrichtung beinhaltet. Diese Vorrichtung weist einen faseroptischen Wellenleiter auf, der um ein Piezoelement gewickelt ist, das sich bei Anlegen einer elektrischen Spannung dehnt, wodurch sich auch der darauf aufgewickelte Wellenleiter dehnt, wodurch sich die Laufstrecke des Lichts ändert. Ein Nachteil der dort beschriebenen Vorrichtung ist, dass die aufgrund der piezoelektrischen Ausdehnung erfolgte Dehnung des faseroptischen Leiters nicht definiert und mehrachsig erfolgt, wodurch spannungsinduzierte Doppelbrechung auftreten kann, was zur Verfälschung der Ergebnisse führt. Darüber hinaus neigt die dort beschriebene Vorrichtung im dynamischen Betrieb zu Partialschwingungen, was deren Brauchbarkeit in Frage stellt.

Aus JP 600 63 517 ist ein ähnlicher Fasenmodulator bekannt, bei dem piezoeelektrische Elemente zu vier Seiten eines im Wesentlichen zylindrischen Körpers angeordnet sind, die gleichzeitig ansteuerbar sind. Bei dieser Anordnung kann zwar eine vergleichsweise hohe Dehnung erzielt werden, jedoch erfolgt die Dehnung undefiniert und mehrachsig, so dass ihr ebenfalls die vorgenannten Nachteile anhaften.

Das Problem der Partizialschwingungen ist erkannt worden. In US-PS 5,101,449 ist eine Anordnung getroffen, bei der im Piezoelement exzentrisch eine Ausnehmung vorgesehen ist, um diese nachteiligen Effekte zu vermindern. Auch aus US-PS 5,493,623 ist eine Vorrichtung bekannt, welche diese Effekte vermindern soll, insbesondere die Anfälligkeit gegen Resonanzen.

In US-PS 5,867,268 ist ein Gerät für die optische Kohärenztomographie beschrieben, bei der ein Lichtwellenleiter spiralförmig auf ein scheibenförmiges Piezoelement aufgeklebt ist. Aus US-PS 5,029,978 ist eine Vorrichtung bekannt, bei der die Lichtwellenleiter in ein piezoelektrisch aktives Polymer eingegossen sind. In der US-PS 5,135,295 ist beschrieben, eine optische Faser mit einem piezoelektrisch aktivem Material zu ummanteln, um auf diese Weise die Faser praktisch unmittelbar strecken zu können.

All den vorerwähnten Vorrichtungen gemeinsam ist, dass die optische Phasenverschiebung über eine an ein Piezoelement angelegte Spannung verändert wird. Die an das Piezoelement angelegte Spannung ist aber nur in erster Näherung proportional zu dessen Längenänderungen, weil Piezoelemente systembedingt ein nichtlineares Ausdehnungsverhalten haben. Bei dynamischer Ansteuerung, d. h. bei Ansteuerung mit einer sich periodisch ändernden Spannung neigen Piezoelemente bei bestimmten Eigenfrequenzen zu Resonanzen. Bei bestimmten Anwendungen für optische Phasenmodulatoren ist es notwendig, die genaue Weglängenänderung des Phasenmodulators zu kennen, um das nichtlineare Verhalten der Piezoelemente rechnerisch kompensieren zu können oder auch um einen Regelkreis aufbauen zu können, um eine gewünschte Wegänderung herbeizuführen.

Vor diesem Stand der Technik liegt der Erfindung die Aufgabe zugrunde, eine gattungsgemäße Vorrichtung so auszugestalten, dass die vorerwähnten Nachteile weitgehend vermieden werden und dass insbesondere eine definierte Weglängenänderung erzielbar ist, die ggf. auch messtechnisch erfasst werden kann.

Diese Aufgabe wird gemäß der Erfindung durch die in Anspruch 1 angegebenen Merkmale gelöst. Vorteilhafte Ausgestaltungen ergeben sich aus den Unteransprüchen, der nachfolgenden Beschreibung und der Zeichnung.

Grundgedanke der vorliegenden Erfindung ist es, die Dehnung des Wellenleiters nur dort herbeizuführen, wo dieser im Wesentlichen geradlinig verläuft, um eine definierte Längenänderung unter Vermeidung der eingangs genannten Nachteile sicher zu stellen. Der Wellenleiter wird dabei auf einen geteilten mehrteiligen Kern aufgewickelt und die Längenänderung durch Abstandsänderung der Kernteile zueinander bewirkt. In einfachster Form kann dies dadurch geschehen, dass der Kern aus zwei Hälften gebildet wird, deren Abstand zueinander veränderbar ist. Auf diese Weise ist es möglich, den Wellenleiter in seinen geradlinigen Abschnitten zwischen diesen Hälften nahezu ausschließlich mit Zugkräften zu beaufschlagen, um eine definierte Längenänderung zu erzielen. Dabei kann praktisch jeder beliebige Antrieb zum Dehnen eingesetzt werden. Auch ist eine Erfassung der Längenänderung ohne weiteres möglich, in dem die Abstandsänderung der Hälften zueinander ermittelt wird.

Grundsätzlich ist es denkbar, die Hälften bzw. die Kernteile zueinander um eine Achse zu verschwenken, um dadurch eine Lageänderung herbeizuführen. Bevorzugt wird die Lageänderung jedoch durch eine Linearverschiebung der Kernteile zueinander erfolgen, da dann sichergestellt werden kann, dass bei geeigneter Anordnung der Windungen sowie Ausgestaltung der Kerne ausschließlich Zugspannungen auf die Wellenleiter aufgebracht werden. Hierdurch können die sonst so nachteiligen spannungsinduzierten Doppelbrechungen vermieden werden. Dabei spielt es prinzipiell keine Rolle, ob beide Kernteile oder auch mehrere Kernteile zueinander bewegt werden oder ob nur ein Kernteil von dem anderen bzw. den übrigen Kernteilen bewegt wird. Die Dehnung kann dabei durch ein Piezoelement, durch ein Stack von Piezoelementen, elektromagnetisch, elektromotorisch (mit einem Exzentertrieb) oder einem anderen geeigneten Antrieb erfolgen, ohne das erfindungsgemäße Prinzip zu verlassen.

Um vorwiegend Zugspannungen im Wellenleiter zu erzeugen, ist es zweckmäßig, den zu bewegenden Kernteil bzw. die zu bewegenden Kernteile entsprechend zu lagern. Dies kann beispielsweise durch eine Linearführung, z. B. eine Wälzlagerführung, mittels einer Gleitlagerführung oder auch mittels einer pneumatischen oder hydraulischen Führung erfolgen. Vorteilhaft kann hier auch ein Festkörpergelenk eingesetzt werden, beispielsweise eine Parallelblattfederführung.

Besonders zweckmäßig ist es, wenn der Kern Abschnitte aufweist, längs derer der Wellenleiter gekrümmt und andere Abschnitte, längs derer der Wellenleiter im Wesentlichen geradlinig verläuft und der Wellenleiter in den Bereichen, in denen er gekrümmt verläuft, auf dem zugehörigen Kernabschnitt festgeklebt oder in anderer geeigneter Weise stoff- oder kraftschlüssig befestigt ist, damit sichergestellt ist, dass in diesen Bereichen keine oder eine nur geringe Relativbewegung zwischen Kern und Wellenleiter erfolgt, sondern nur in den Bereichen, in denen der Wellenleiter geradlinig verläuft. In letzteren Bereichen sollte der Wellenleiter vorzugsweise nicht unmittelbar oder wenn nur mit möglichst geringem Reibungskoeffizienten anliegen, um keine Querkräfte neben den Zugspannungen einzuleiten. Andererseits bringt eine solche Stützung der im Wesentlichen geradlinig verlaufenden Abschnitte des Wellenleiters erhebliche Vorteile mit sich, insbesondere im dynamischen Betrieb, da dann ein unkontrolliertes Schwingen des Wellenleiters in diesen Bereichen verhindert werden kann.

Besonders vorteilhaft ist es, wenn die Kernabschnitte, in denen der Wellenleiter gekrümmt verläuft, durch Hälften eines zylindrischen Körpers gebildet sind, der längs seiner Achse geteilt ist. Im übrigen Bereich zwischen diesen Zylinderhälften sind zweckmäßigerweise Führungen vorgesehen, welche ein Querschwingen des Wellenleiters verhindern oder zumindest dämpfen.

Bei der erfindungsgemäßen Vorrichtung kann bevorzugt auch ein Piezoelement oder ein Stack von Piezoelementen als Antrieb Verwendung finden, da das nichtlineare Verhalten entweder durch eine entsprechende Regelung oder messtechnisch kompensiert werden kann. Hierzu ist parallel zum Antrieb, z. B. zwischen den zueinander beweglichen Kernabschnitten, ein Messwertaufnehmer vorzusehen, vorzugsweise ein kapazitiver Aufnehmer. Es können aber auch je nach Art und Umfang der Dehnungen beliebige andere Messwertaufnehmer, z.B. Dehnungsmessstreifen (DMS), induktive Aufnehmer oder dergleichen eingesetzt werden.

Als Wellenleiter kann vorteilhaft Quarzfaser eingesetzt werden, wobei je nach Anforderungen schutzummantelte oder auch nicht schutzummantelte Quarzfaser Verwendung finden kann. Derartige Quarzfasern sind kostengünstig herzustellen und können bis zu 10 % elastisch gedehnt werden, so dass schon bei geringer Wicklungszahl große Längenänderungen erreicht werden können. Bevorzugt erfolgt die Wicklung einlagig, es können jedoch auch mehrlagige Wicklungen vorgesehen sein, wenn sichergestellt wird, dass der Wellenleiter im Bereich seiner gekrümmten Abschnitte festgelegt wird, um mehrachsige Spannungseinleitungen zu vermeiden.

Bevorzugt weist die Vorrichtung eine Regelung auf, welche in Abhängigkeit des vom Wegaufnehmer (Messwertaufnehmer) abgegebenen Signals das den Abstand der Kernteile bestimmende Antriebselement steuert, so dass die Längenänderung der Laufstrecke gezielt veränderbar ist, insbesondere auch in Abhängigkeit der Zeit. Auf diese Weise kann die Längenänderung nach einem vorgegebenen Geschwindigkeits- oder Wegprofil erfolgen.

Bei Einsatz eines Piezoelements als Antrieb kann es vorteilhaft sein, dieses im Resonanzbereich zu betreiben, da dann die Kraftentfaltung, d. h. also der Wirkungsgrad besonders hoch ist. Darüber hinaus arbeitet die Vorrichtung in diesem Bereich sehr frequenzstabil.

Ein bevorzugter Einsatzzweck der erfindungsgemäßen Vorrichtung ist bei der Fouriertransformspektroskopie, und zwar im Probenzweig. Auch kann die Vorrichtung als Phasenmodulator wahlweise im Referenz- und/oder im Probenzweig eines Interferometers eingesetzt werden, das bei der optischen Kohärenztomographie eingesetzt wird. Eine solche interferometrische Messanordnung kann beispielsweise zwei Koppeleinrichtungen aufweisen, wobei in einer ersten Koppeleinrichtung die von einer Lichtquelle kommenden Lichtwellen in einen Probenarm und in einen Referenzarm eingekoppelt werden und in der zweiten Koppeleinrichtung die vom Referenzarm kommenden Lichtwellen sowie die vom Probenarm kommenden Lichtwellen überlagert und mindestens einem, vorzugsweise zwei Detektoren zugeführt werden, welche die optische Interferenz in ein elektrisches Signal umwandeln. Bei dieser Anordnung ist der Referenzarm durch einen sich zwischen den Koppeleinrichtungen erstreckenden Faserleiter gebildet. Der Probenarm weist vorzugsweise mindestens zwei Faserleiter auf, die sich zu beiden Seiten der ersten Koppeleinrichtung erstrecken. Eine solche Anordnung ist besonders lichtstark und aufgrund ihres Aufbaus (Führung der Lichtwellen nahezu ausschließlich in Faserleitern) weitgehend unempfindlich gegen äußere Umgebungseinflüsse. Über das freie Ende des Probenarms kann darüber hinaus die Topologie eines externen Objektes eingebunden werden, wie es beispielsweise bei der Fourier-Transformspektroskopie erfolgt. Vorteilhaft wird die erfindungsgemäße Vorrichtung sowohl im Probenzweig als auch im Referenzzweig eines Interferometers eingesetzt, wobei eine Vorrichtung zur dynamischen Weglängenänderung des Lichts und die andere zur statischen Einstellung des Arbeitspunktes dient. Dabei können in vorteilhafter Ausgestaltung der Erfindung beide Vorrichtungen thermisch, beispielsweise durch ein wärmeleitendes gemeinsames Traggestell miteinander verbunden sein, wodurch sichergestellt wird, dass auch bei sich ändernder Betriebstemperatur keine nach außen in Erscheinung tretende Verschiebung des Arbeitspunktes bzw. eine entsprechende Verschiebung auch im anderen Zweig erfolgt, die dies kompensiert.

Aufgrund der definierten Längenänderung bzw. der einfachen Erfassbarkeit der Längenänderung kann die erfindungsgemäße Vorrichtung in vielen Bereichen eingesetzt werden, beispielsweise zur Feldstärkemessung unter Ausnutzung des elektrostriktiven Effekts.

Die Erfindung ist nachfolgend anhand eines in der Zeichnung dargestellten Ausführungsbeispiels erläutert. Es zeigen:
- Fig. 1: in stark vereinfachter schematischer Darstellung das Prinzip der vorliegenden Erfindung,
- Fig. 2: in perspektivischer Darstellung ein Ausführungsbeispiel einer Vorrichtung gemäß der Erfindung und
- Fig. 3: in schematischer Prinzipdarstellung die Anwendung der erfin dungsgemäßen Vorrichtung bei einem Interferometer.

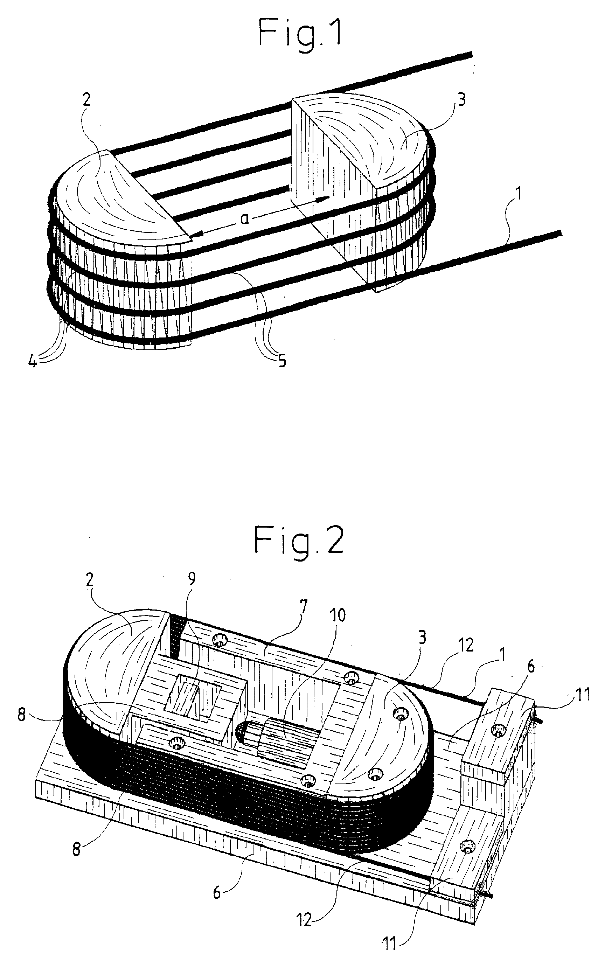

Wie die Prinzipdarstellung nach Fig. 1 veranschaulicht, ist ein Wellenleiter 1 in Form einer Quarzfaser auf einen aus Teilen 2 und 3 bestehenden Kern aufgewickelt, deren Abstand a mittels eines nicht dargestellten Antriebs veränderbar ist. Die Kernteile 2 und 3 bilden jeweils die Hälfte eines zylindrischen Körpers, so dass der Wellenleiter 1 gekrümmte Abschnitte 4 aufweist, mit denen er am Kern anliegt sowie im Wesentlichen geradlinig verlaufende Abschnitte 5, die zwischen den Kernteilen 2 und 3 gebildet sind. Dabei ist der Wellenleiter 1 mit seinen Enden festgelegt und darüber hinaus im Bereich der gekrümmten Abschnitte 4 so mit den Kernteilen 2 und 3 verbunden, dass durch Änderung des Abstandes a lediglich die geradlinig verlaufenden Abschnitte 5 des Wellenleiters 1 zugbelastet bzw. -entlastet werden. Der Wellenleiter ist unter Vorspannung auf dem Kern aufgewickelt, so dass sichergestellt ist, dass die geradlinigen Abschnitte 5 stets gespannt sind. Wird nun der Abstand a zwischen den Kernteilen 2 und 3 um eine Länge Δa vergrößert, so folgt der Wellenleiter 1 dieser Bewegung durch Dehnung der geradlinigen Abschnitte 5. Bei dem anhand von Fig. 1 dargestellten Beispiel, bei dem der Wellenleiter 1 in vier Wicklungen aufgewickelt ist, ergibt sich somit eine Längenänderung des Wellenleiters 1, die der Abstandsänderung Δa multipliziert mit dem Zweifachen der Wicklungszahl (Verdopplung, da die geradlinigen Abschnitte 5 in jeder Wicklung zweimal vorhanden sind), im vorliegenden Fall also im Achtfachen der Abstandsänderung Δa entspricht. Bei Verwendung von marktüblichen Quarzfasern als Wellenleiter kann eine Vielzahl von Wicklungen auf den Kern aufgewickelt werden, so dass sich eine ganz erhebliche Längenänderung des Wellenleiters 1 schon dann ergibt, wenn man den Abstand der Kernteile 2 und 3 nur geringfügig ändert.

Um beispielsweise eine für die optische Kohärenztomographie erforderliche Weglängenänderung von 2 mm zu erreichen, genügt eine Abstandsänderung der Kernteile 2 und 3 von 45 µ, wenn der Abstand a 80 mm beträgt und 23 Wicklungen vorgesehen sind. Legt man einen Kerndurchmesser von 30 mm zugrunde, dann ergibt sich eine Gesamtlänge des Wellenleiters 1 von 5,50 m.

Bei dem in Fig. 2 dargestellten Ausführungsbeispiel ist eine solche Vorrichtung auf einer Grundplatte 6 aufgebaut. Fest mit der Grundplatte verbunden ist ein Kernteil 3, wohingegen der in Fig. 2 linke Kernteil 2 über ein nicht dargestelltes Festkörpergelenk linear verschiebbar auf der Grundplatte 6 angeordnet ist. Die Kernteile 2 und 3 weisen wie bei der Prinzipdarstellung nach Fig. 1 halbzylindrische Formen auf, jedoch schließt sich an den Kernteil 3 ein in Draufsicht uförmiger Führungsteil 7 an, der die geradlinigen Abschnitte 5 des in Form einer Quarzfaser ausgebildeten Wellenleiters 1 führt. Dieser Führungsteil 7 liegt mit geringem Spiel an diesen Abschnitten 5 an und soll verhindern, dass diese im dynamischen Betrieb quer zur Richtung der Abstandsänderung schwingen. Der Führungsteil 7 kann jedoch auch reibungsbehaftet an den geradlinigen Abschnitten der Quarzfaser anliegen, um gezielt eine erhöhte Dämpfung zu bewirken. Die Kernteile 3 und 7 sind mittels nicht dargestellter Schrauben auf der Grundplatte 6 befestigt.

An den linken halbzylindrischen Kernteil 2 schließt sich ein quaderförmiger Teil 8 an, der in den Führungsteil 7 innen hineinragt und Teil einer kapazitiven Wegmesseinrichtung zwischen dem beweglichen Bauteil 8 und einem feststehenden Bauteil 9 ist.

Zwischen den Kernteilen 2 und 3 ist ein piezoelektrisches Element 10 als Antrieb vorgesehen, das sich an der Innenseite des Führungsteils 7 einerseits sowie an der gegenüberliegenden Seite des quaderförmigen Teils 8 andererseits abstützt. Das piezoelektrische Element 10 kann aus mehreren hintereinander und/oder parallel angeordneten Einzelelementen aufgebaut sein.

Die Quarzfaser 1 ist einlagig über dem Kern 2, 3, 7 aufgewickelt, wobei die Quarzfaser 1 im Bereich ihrer gekrümmten Abschnitte 4 an den Kernteilen 2 und 3 fest anliegt, wohingegen im Bereich der geradlinigen Abschnitte 5 eine lose Anlage an den Seiten des Führungsteils 7 besteht, so dass sich die Quarzfaser in diesen geradlinigen Abschnitten 5 frei dehnen und auch wieder zusammenziehen kann. Endseitig ist die Quarzfaser 1 festgelegt, und zwar mittels zweier Klemmplatten 11, die mit der Grundplatte 6 verbunden sind. Die Aufwicklung erfolgt unter Vorspannung.

Sobald das piezoelektrische Element 10 spannungsbeaufschlagt wird, dehnt sich dieses in Achsrichtung aus, wodurch die Kernteile 2 und 3 voneinander weg bewegt werden (Abstandsänderung Δa), wodurch eine Dehnung der geradlinigen Abschnitte 5 der Quarzfaser erfolgt. Da die Bewegung, d. h. der zeitliche Verlauf der Abstandsänderung mittels der Wegmesseinrichtung 8, 9 erfasst wird, kann über eine hier nicht im Einzelnen beschriebene Regelung das piezoelektrische Element 10 so angesteuert werden, dass ein vorbestimmtes Weg- oder Geschwindigkeitsprofil erzeugt wird. In jedem Falle ist die Abstandsänderung Δa und damit die Längenänderung der Quarzfaser 1 exakt ermittelbar. Die Rückstellung des beweglichen Teils 3 erfolgt zum einen über die Federwirkung des Festkörpergelenks und zum anderen über die Rückstellkraft der Quarzfaser 1. Die Vorrichtung ist insbesondere auch zum dynamischen Betrieb geeignet, das piezoelektrische Element 10 wird hierzu mit einer Frequenz im Bereich der Eigenresonanz angeregt.

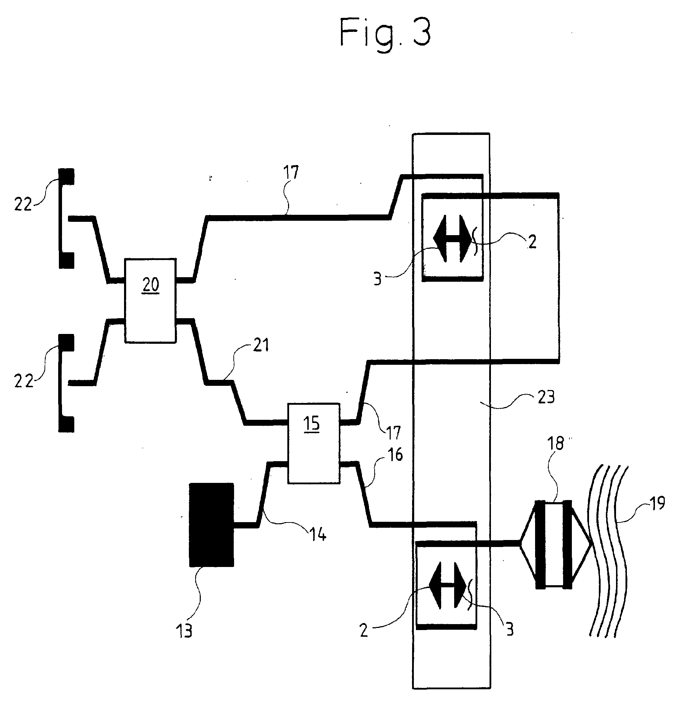

Anhand von Fig. 3 ist dargestellt, wie die vorbeschriebene Vorrichtung in einer interferometrischen Messanordnung eingesetzt werden kann. Diese Anordnung besteht aus einer Lichtquelle 13 in Form eines Lasers, dessen Licht in eine Quarzfaser 14 eingespeist ist, die in einer ersten Koppeleinrichtung 15 mündet und dort in eine Quarzfaser 16 sowie eine Quarzfaser 17 geleitet wird. Die Quarzfaser 16 bildet Teil des Probenzweiges der interferometrischen Messanordnung und ist ähnlich der anhand von Fig. 2 beschriebenen Ausführung auf zwei zueinander bewegliche Kemteile 2 und 3 aufgewickelt, deren Abstand zueinander änderbar ist. Das Ende der Quarzfaser 16 mündet in einer optischen Linsenanordnung 18, die mit Abstand vor einer zu untersuchenden Probe 19 angeordnet wird.

Die Quarzfaser 17 ist ebenfalls auf einem Kern aufgewickelt, dessen Kernteile 2 und 3 in ihrem Abstand zueinander einstellbar sind. Die Quarzfaser 17 bildet den Referenzzweig der interferometrischen Messanordnung. Über die Abstandsänderung der Kernteile 2 und 3 kann der Arbeitspunkt der Anordnung eingestellt werden. Die Quarzfaser 17 mündet in einer zweiten Koppeleinrichtung 20, in der auch eine von der ersten Koppeleinrichtung 15 kommende Quarzfaser 21 mündet, welche das aus der Quarzfaser 16 von der Probe 19 reflektierte Licht weiterleitet, das innerhalb der zweiten Koppeleinrichtung 20 mit dem aus der Glasfaser 17 kommenden Licht des Referenzzweiges, also letztlich der Lichtquelle 13, überlagert wird. Der Ausgang der zweiten Koppeleinrichtung 20 ist mit zwei Detektoren 22 (Lichtintensitäts-/Stromwandler) versehen, über welche dann die elektrische Auswertung der optischen Signale erfolgt.

Während die Kernteile 2 und 3, auf welche die Quarzfaser 17 aufgewickelt ist, lediglich zur Einstellung des Arbeitspunktes in ihrem Abstand veränderbar sind, weisen die Kernteile 2 und 3, auf denen die Quarzfaser 16 aufgewickelt ist, einen Antrieb wie anhand von Fig. 2 dargestellt auf. Da das Licht die Glasfaser 16 sowohl auf dem Hinweg zur Probe 19 als auch auf dem Rückweg durchläuft, geht jede Abstandsänderung der Kernteile 2 und 3 ungeachtet der Wicklungszahl zusätzlich mit dem Faktor 2 ein.

Eine Besonderheit der in Fig. 3 dargestellten Anordnung ist eine wärmeleitende Platte 23, mit der die Kernteile 2 und 3 sowohl der Quarzfaser 16 als auch der Quarzfaser 17 wärmeleitend verbunden sind. Eine solche wärmeleitende Verbindung der Kernteile 2 und 3 kann auch durch geeignete andere Maßnahmen herbeigeführt werden und hat den vorteilhaften Effekt, dass die Messanordnung praktisch temperaturunabhängig arbeitet, da eine temperaturbedingte Längenänderung der Quarzfaser 17 auch eine solche der Quarzfaser 16 bedingt, gleiche Länge und Wicklungszahlen vorausgesetzt.

### Bezugszeichenliste

- 1 -: Wellenleiter, Quarzfaser
- 2 -: linker Teil des Kerns
- 3 -: rechter Teil des Kerns
- 4 -: gekrümmte Abschnitte von 1
- 5 -: geradlinige Abschnitte von 1
- 6 -: Grundplatte
- 7 -: Führungsteil
- 8 -: quaderförmiger Teil
- 9 -: Wegmesseinrichtung
- 10 -: piezoelektrisches Element
- 11 -: Klemmplatten
- 12 -: erste geradlinige Abschnitte von 1
- 13 -: Lichtquelle
- 14 -: Quarzfaser
- 15 -: erste Koppeleinrichtung
- 16 -: Quarzfaser
- 17 -: Quarzfaser
- 18 -: Linsenanordnung
- 19 -: Probe
- 20 -: zweite Koppeleinrichtung
- 21 -: Quarzfaser
- 22 -: Detektoren
- 23 -: wärmeleitende Platte

- a -: Abstand
- Δa -: Abstandsänderung

## Patentansprüche

1. Vorrichtung zur Veränderung der Länge der Laufstrecke einer elektromagnetischen Welle, insbesondere eines Lichtstrahls, die in einem Wellenleiter (1) geführt wird, bei welcher die Längenänderung durch Dehnung des auf einen mehrteiligen Kern (2, 3) aufgewickelten Wellenleiters (1) erfolgt, indem eine Änderung der Lage der Kernteile (2 ,3) zueinander bewirkt wird, **dadurch gekennzeichnet, dass** der Wellenleiter (1) abschnittsweise im Wesentlichen geradlinig geführt ist und das die Dehnung im Wesentlichen nur in diesen geradlinigen Abschnitten des Wellenleiters (1) erfolgt.

2. Vorrichtung nach Anspruch 1, **dadurch gekennzeichnet, dass** der Kern aus zwei Hälften (2, 3) besteht, deren Abstand (a) zueinander veränderbar ist.

3. Vorrichtung nach einem der vorhergehenden Ansprüche, **dadurch gekennzeichnet, dass** der Kern (2, 3) Abschnitte aufweist, längs derer der Wellenleiter (1) gekrümmt und Abschnitte (7) längs derer der Wellenleiter (1) im Wesentlichen geradlinig verläuft, wobei die ersteren Abschnitte (2, 3) Teil eines längs seiner Achse geteilten Zylindermantels bilden.

4. Vorrichtung nach einem der vorhergehenden Ansprüche, **dadurch gekennzeichnet, dass** zwischen den Kernteilen (2, 3) mindestens ein vorzugsweise im Resonanzberich betriebenes Piezoelement (10) zur Erzeugung der Lageänderung vorgesehen ist.

5. Vorrichtung nach einem der vorhergehenden Ansprüche, **dadurch gekennzeichnet, dass** zwischen den Kernteilen (2, 3) mindestens ein vorzugsweise kapazitiver Wegaufnehmer (8, 9) zur Erfassung der Längenänderung (Δa) vorgesehen ist.

6. Vorrichtung nach einem der vorhergehenden Ansprüche, **dadurch gekennzeichnet, dass** die mechanische Führung mindestens eines Teils der Kerns (3) mittels eines Festkörpergelenks erfolgt.

7. Vorrichtung nach einem der vorhergehenden Ansprüche, **dadurch gekennzeichnet, dass** der Wellenleiter (1) in den Abschnitten, in denen er im Wesentlichen geradlinig verläuft und seine Längenänderung erfährt, mit Mitteln zur Schwingungsdämpfung versehen ist, insbesondere an den geradlinig verlaufenden Kernabschnitten (7) dämpfend anliegt.

8. Vorrichtung nach einem der vorhergehenden Ansprüche, **dadurch gekennzeichnet, dass** der Wellenleiter eine Quarzfaser (1) ist.

9. Vorrichtung nach einem der vorhergehenden Ansprüche, **dadurch gekennzeichnet, dass** der Wellenleiter (1) über seine gesamte Wicklungslänge am Kern (2, 3, 7) abgestützt ist und dass Mittel vorgesehen sind welche die Reibung zwischen Wellenleiter und Kern in den Bereichen der gekrümmten Flächen (4) gegenüber den Bereichen (5), in denen der Wellenleiter (1) im Wesentlichen geradlinig verläuft, erhöht ist.

10. Vorrichtung nach einem der vorhergehenden Ansprüche, **dadurch gekennzeichnet, dass** eine Regelung vorgesehen ist, welche das den Abstand (c) der Kernteile (2, 3) bestimmende Antriebselement (10) in Abhängigkeit des vom Wegaufnehmer (9) abgegebenen Signals steuert.

11. Vorrichtung nach einem der vorhergehenden Ansprüche, **dadurch gekennzeichnet, dass** die Längenänderung (Δa) nach einen vorgegebenen Geschwindigkeits- oder Wegprofil erfolgt.

12. Vorrichtung nach einem der vorhergehenden Ansprüche, **dadurch gekennzeichnet, dass** sie bei der Fouriertransformspektroskople im Probenzweig verwendet wird.

13. Vorrichtung nach einem der vorhergehenden Ansprüche, **dadurch gekennzeichnet, dass** sie unter Ausnutzung des elektrostriktiven Effekts zur Feldstärkemessung eingesetzt wird.

14. Vorrichtung nach einem der vorhergehenden Ansprüche, **dadurch gekennzeichnet, dass** sie als Phasenmodulator im Referenz-und/oder vorzugsweise im Probenzweig des in der optischen Kohärenztomographie (OCT) verwendeten Interferometers eingesetzt wird.

15. Vorrichtung nach einem der vorhergehenden Ansprüche, **dadurch gekennzeichnet, dass** sie im Referenzzweig (17) und im Probenzweig (16) vorgesehen ist, wobei beide Vorrichtungen wärmeleitend miteinander verbunden sind.
